# EUROPÄISCHE PATENTSCHRIFT

(11) **EP 0 762 017 B1**
(45) Veröffentlichungstag und Bekanntmachung des Hinweises auf die Patenterteilung: **02.12.1998**
(21) Anmeldenummer: 96111980.7
(22) Anmeldetag: 25.07.1996
(51) Int. Cl.: F16H 57/04

(54) **Antriebsanordnung für ein Kraftfahrzeug**
Drive assembly for vehicle
Ensemble d'entraînement pour véhicule

(30) Priorität: 11.08.1995 DE 19529586
(43) Veröffentlichungstag der Anmeldung: 12.03.1997
(73) Patentinhaber: DAIMLER-BENZ AKTIENGESELLSCHAFT, 70567 Stuttgart (DE)
(72) Erfinder: Merkle, Hans, 70599 Stuttgart (DE); Müller, Hubert, 75233 Tiefenbronn (DE)

(56) Entgegenhaltungen:
- DE-A- 3 906 330
- DE-C- 3 939 651
- DE-U- 1 946 942
- FR-A- 1 199 681
- US-A- 5 505 112

## Beschreibung

Die Erfindung bezieht sich auf eine Antriebsanordnung nach dem Oberbegriff von Patentanspruch 1.

Eine Antriebsanordnung dieser Art ist aus der EP 0 512 214 A2 bekannt.

Bei Antriebsanordnungen der eingangs genannten Art liegt das Differentialgetriebe mit an der tiefsten Stelle, weshalb das vom Zahnräderwechselgetriebe zurückfließende Öl die Tendenz hat, sich im Gehäuseinnenraum des das Differentialgetriebe aufnehmenden Teilgehäuses anzusammeln. Dies führt zu einem Ölmangel im Zahnräderwechselgetriebe und zu erhöhter Plantscharbeit des Ringzahnrades in der sich ansammelnden Ölmenge im Teilgehäuse.

Die der Erfindung zugrunde liegende Aufgabe besteht im wesentlichen darin, die sich durch das Ansammeln von Öl im Teilgehäuse einstellenden und vorstehend genannten Nachteile zu vermeiden.

Die erläuterte Aufgabe ist gemäß der Erfindung in vorteilhafter Weise mit den kennzeichnenden Merkmalen von Patentanspruch 1 gelöst.

Bei der Antriebsanordnung nach der Erfindung ist an der tiefsten Stelle der erfindungsgemäß vorgesehenen Speicherkammer eine Öffnung angeordnet, die durch ein bimetallgesteuertes Absperrventil temperaturabhängig verschlossen werden kann. Die Kennlinie des Bi-Metalles kann so gewählt sein, daß bis ca. 70°C Öltemperatur das Absperrventil geöffnet - bei höheren Temperaturen dagegen geschlossen ist. Dadurch wird erreicht, daß bei niederen Temperaturen das über die obere Eintrittsöffnung der Speicherkammer zufließende Öl über das offene Absperrventil in den das Ringzahnrad aufnehmenden Gehäuseinnenraum des Teilgehäuses abfließt und von dort durch das Ringzahnrad sofort zur Ölwanne des Getriebegehäuses gefördert werden kann. Dadurch ist gewährleistet, daß in der Ölwanne ausreichend Öl vorhanden ist, um das Luftansaugen durch die Ölpumpe zu verhindern. Die Speicherkammer ist dabei weitgehend leer. Bei höheren Temperaturen, bei denen das Absperrventil geschlossen ist, füllt sich die Speicherkammer über die Eintrittsöffnung bis zur Überlaufkante. Von dort fließt das Öl über einen Gehäusekanal zur Ölwanne. Auf diese Weise kann die Ölspiegelschwankung, die durch Wärmedehnung des Öles entsteht, entsprechend dem Volumen der Speicherkammer verringert werden. Das schädliche Hochsteigen des Öles bei heißem Getriebe wird dadurch weitgehend vermieden. Um ein großes Speichervolumen zu erhalten, kann der Gehäuseinnenraum des Teilgehäuses bewußt groß ausgelegt sein. Die Speicherkammer kann eng neben dem Ringzahnrad liegen, wodurch dessen Plantschleistung und damit die Verlustleistung wie auch das Verschäumen des Öles vermindert werden können. Durch dieses enge Einkapseln des Ringzahnrades kann das Öl wirksam aus dem Gehäuseinnenraum abgeschöpft werden.

Bei der Antriebsanordnung nach der Erfindung wird durch die Ausgestaltung gemäß Patentanspruch 2 erreicht, daß das die Speicherkammer über deren Austrittsöffnung verlassende Öl an einer Stelle zwischen einer Seitenwand der Ölwanne und einem in üblicher Weise in die Ölwanne hineinragenden Steuergehäuse der Schaltvorrichtung ungestört in die Ölwanne eingeleitet werden kann.

Bei der Antriebsanordnung nach der Erfindung ist eine vorteilhafte Überleitung der über die Austrittsöffnung die Speicherkammer verlassenden Ölmengen in das Getriebegehäuse durch die Ausgestaltung nach Patentanspruch 3 erreicht.

Bei der Antriebsanordnung nach der Erfindung kann die Speicherkammer beispielsweise eine einstückige Ausbildung der Kammerwände mit dem das Differentialgetriebe aufnehmenden Teilgehäuse aufweisen.

Bei einer vorteilhaften Ausführungsform der Antriebsanordnung nach der Erfindung ist für die Speicherkammer gemäß Patentanspruch 4 ein Gehäuseeinsatz verwendet.

Die Patentansprüche 5 bis 7 haben eine vorteilhafte Anordnung und Ausgestaltung eines als Speicherkammer verwendeten Gehäuseeinsatzes zum Gegenstand.

Funktionale Einzelheiten des Zahnräderwechselgetriebes 13 sind der Patentanmeldung P 43 18 713.7-12 zu entnehmen.

Einzelheiten der Erfindung ergeben sich aus der nachstehenden Beschreibung eines in der Zeichnung schematisch dargestellten Ausführungsbeispieles. In der Zeichnung bedeuten:

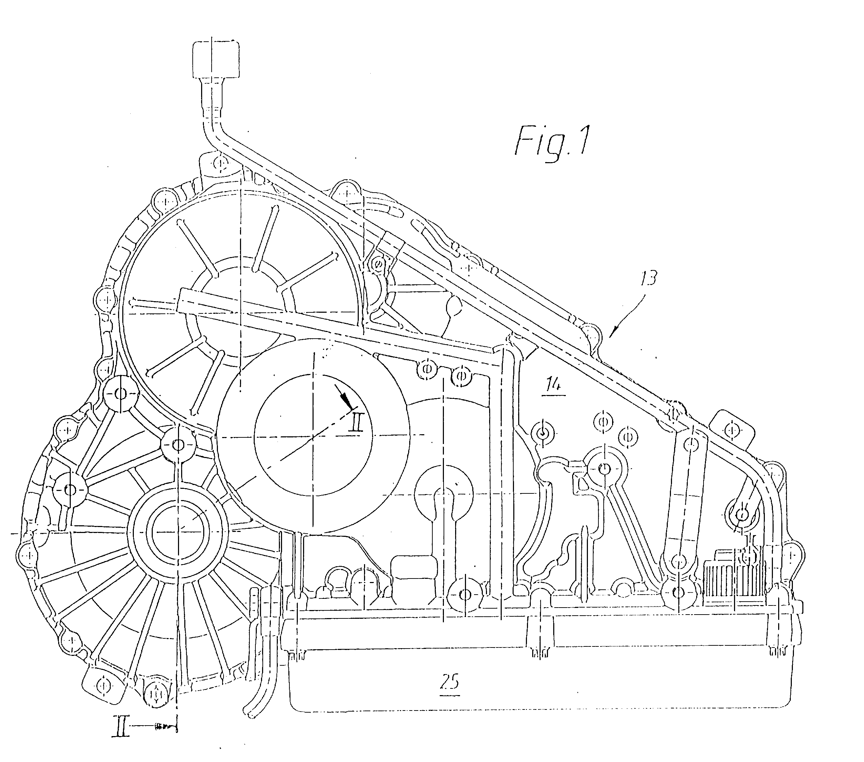

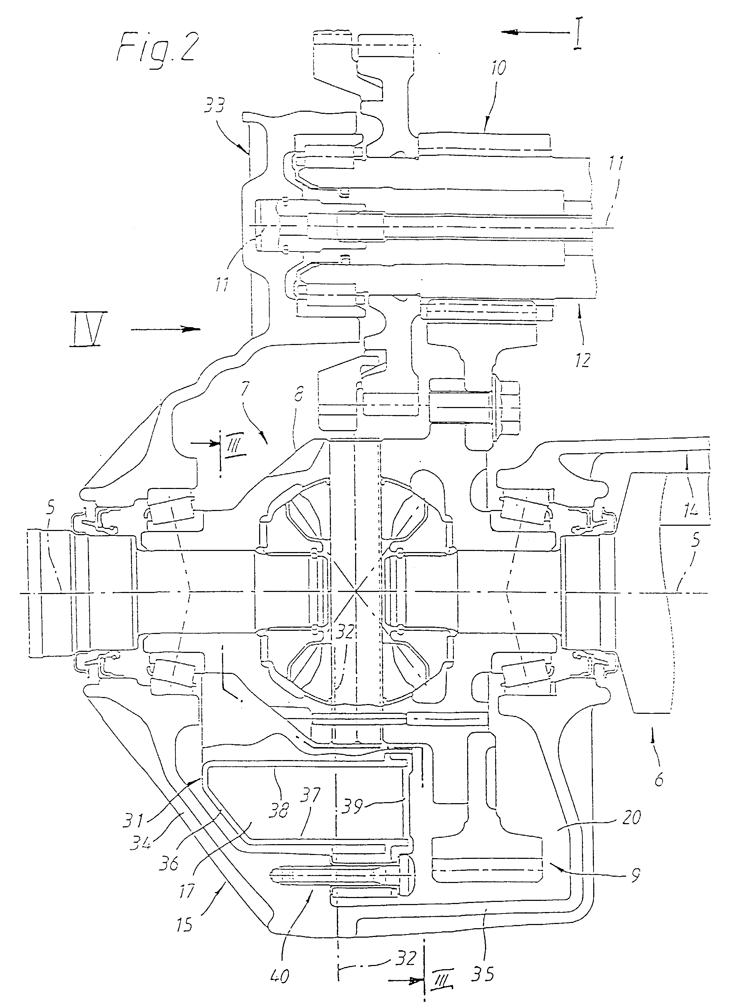

- Fig. 1: eine Antriebsanordnung nach der Erfindung in einer Seitenansicht, in der Pfeilrichtung I von Fig. 2 gesehen,
- Fig. 2: einen Teilschnitt durch die Antriebsanordnung von Fig. 1 nach Linie II-II,

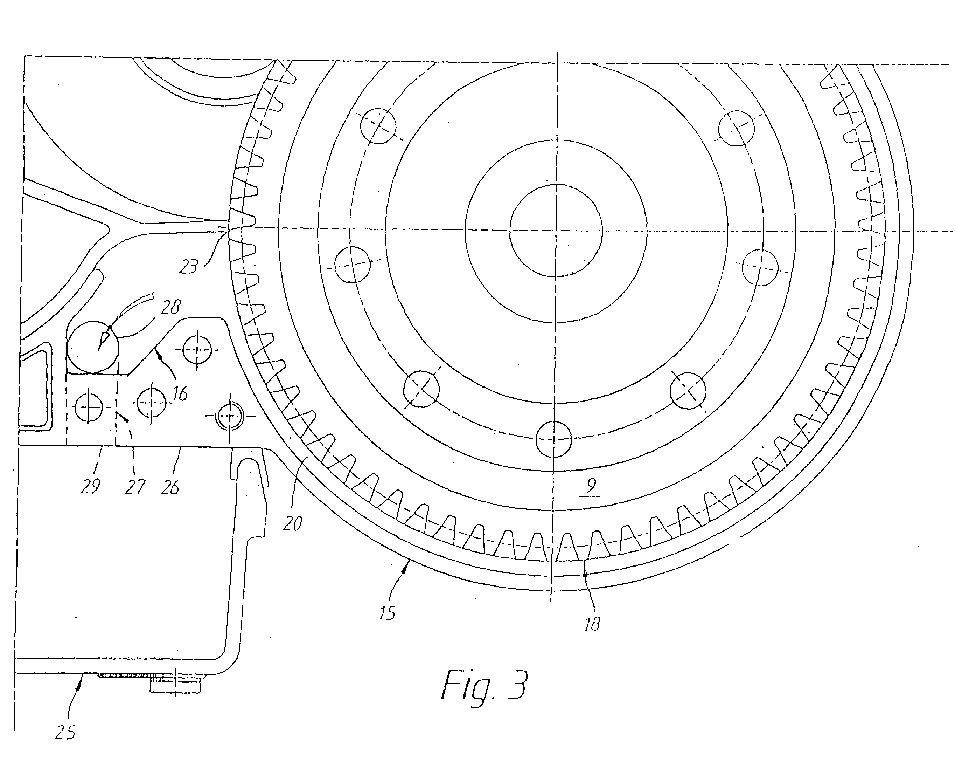

- Fig. 3: einen Teilschnitt durch die Antriebsanordnung von Fig. 1 nach Linie III-III von Fig. 2, und

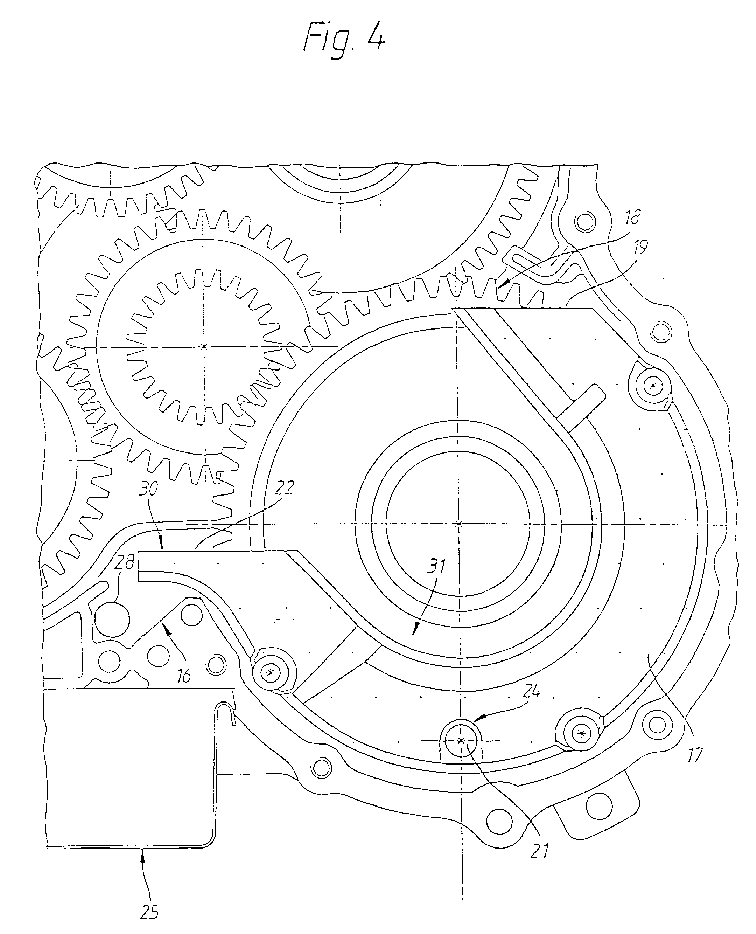

- Fig. 4: die Antriebsanordnung von Fig. 1 in einer seitlichen Teilansicht in Pfeilrichtung IV der Fig. 2 gesehen, wobei der Gehäuseteil 34 als entfernt gedacht ist.

Ein Zahnräderwechselgetriebe 13 eines Kraftfahrzeuges weist ein Getriebegehäuse 14 auf, in welchem eine den Getriebeausgang bildende Getriebewelle 12 mit einem Zahnrad 10 in der üblichen Weise drehbar gelagert ist. Die Getriebewelle 12 ist mit ihrer Drehachse 11-11 parallel zu einer geometrischen Hauptachse 5-5 einer Antriebsachse 6 angeordnet, deren Differentialgetriebe 7 mit seiner Zentralachse koaxial zur Hauptachse 5-5 liegt und in einem Teilgehäuse 15 gelagert ist, welches in einer zur Hauptachse 5-5 senkrechten Gehäuseebene 32-32 in einen mit einem Wandlergehäuse 33 einstückig ausgebildeten Gehäuseteil 34 und einen mit dem Getriebegehäuse 14 einstückig ausgebildeten Gehäuseteil 35 geteilt ist. Mit dem als Umlaufräderträger für die umlaufenden Ausgleichskegelräder des Differentialgetriebes 7 verwendeten Differentialgetriebegehäuse 8 ist in der üblichen Weise ein zur Hauptachse 5-5 zentrisches Ringzahnrad 9 bewegungsfest verschraubt, welches mit dem Zahnrad 10 der Getriebewelle 12 kämmt.

In dem Gehäuseinnenraum 20 des Teilgehäuses 15 ist ein im wesentlichen ringförmiger Gehäuseeinsatz 31 vorgesehen, welcher das Differentialgetriebegehäuse 8 zu einem großen Teil konzentrisch umschließt und axial neben dem Ringzahnrad 9 angeordnet sowie als Zwischenspeicher für Getriebeöl verwendet ist. Der Gehäuseeinsatz 31 besteht aus einem im Querschnitt U-förmigen Hohlkörper 36 mit in Einbaulage zur Hauptachse 5-5 parallelen Schenkelwänden 37 und 38 sowie aus einem zur Hauptachse 5-5 konzentrischen ringförmigen Abschlußdeckel 39. Der Hohlkörper 36 ist zwischen dem Abschlußdeckel 39 und dem Gehäuseteil 34 durch Schraubbolzen fest eingespannt.
Der Hohlraum des Gehäuseeinsatzes 31 ist als eine Speicherkammer 17 verwendet, welche durch eine im Bereich des Zahnkranzes 18 des Ringzahnrades 9 liegende Eintrittsöffnung 19 im oberen Endbereich des Gehäuseeinsatzes 31 mit dem Gehäuseinnenraum des Getriebegehäuses 14 in Verbindung steht. Die Speicherkammer 17 steht mit einem Gehäusedurchgang 16 des Getriebegehäuses 14, der einen in den Gehäuseinnenraum 20 des Teilgehäuses 15 offen ausmündenden Mündungsabschnitt 23 aufweist, durch eine zu einem Überlauf 30 ausgebildete Austrittsöffnung 22 am anderen Ende des Gehäuseeinsatzes 31 in Verbindung. An der in Einbaulage tiefsten Stelle des Teilgehäuses 15 weist der Gehäuseeinsatz 31 eine untere Öffnung 21 auf, welche die Speicherkammer 17 mit dem Gehäuseinnenraum 20 verbindet und durch ein temperaturabhängig gesteuertes Absperrventil 24 verschließbar ist.

Das Getriebegehäuse 14 weist an seiner Unterseite eine Trennfläche 26 für die Befestigung einer nach oben offenen Ölwanne 25 auf. Ölwanne 25 und Trennfläche 26 schließen sich an das Teilgehäuse 15 in einer zur Hauptachse 5-5 senkrechten Richtung an, wobei die Trennfläche 26 in einer zur Hauptachse 5-5 parallelen und in Einbaulage etwa horizontal ausgerichteten Gehäuseebene des Getriebegehäuses 14 liegt.
Das Getriebegehäuse 14 weist einen Gehäusekanal 27 auf, dessen eines Kanalende 28 in den Gehäusedurchgang 16 ausmündet. Das andere Kanalende 29 des Gehäusekanales 27 mündet in der Trennfläche 26 an einer Stelle aus, welche zwischen einer Seitenwand der Ölwanne 25 und einem in der Ölwanne 25 angeordneten Steuergehäuse liegt und mit dem Innenraum der Ölwanne 25 offen in Verbindung steht.

## Patentansprüche

1. Antriebsanordnung für ein Kraftfahrzeug, mit einem mit seiner Zentralachse fluchtend zu einer geometrischen Hauptachse (5-5) einer Antriebsachse (6) angeordneten Differentialgetriebe (7), mit einem mit dem Umlaufräderträger (8) des Differentialgetriebes (7) drehfest verbundenen Ringzahnrad (9), welches konzentrisch zur Zentralachse angeordnet ist und mit einem Zahnrad (10) einer mit ihrer Drehachse (11-11) parallel zur geometrischen Hauptachse (5-5) angeordneten Getriebewelle (12) eines Zahnräderwechselgetriebes (13) kämmt, mit einem die Getriebewelle (12) lagernden Getriebegehäuse (14) und einem das Differentialgetriebe (7) lagernden, zum Getriebegehäuse (14) bewegungsfest und flüssigkeitsdicht angeordneten Teilgehäuse (15), in welchem auch das Ringzahnrad (9) zumindest teilweise aufgenommen ist, und mit einem die Gehäuseinnenräume des Getriebegehäuses (14) und des Teilgehäuses (15) miteinander verbindenden Gehäusedurchgang (16),
**dadurch gekennzeichnet**,
daß das Teilgehäuse (15) eine sich zumindest teilweise konzentrisch zur Hauptachse (5-5) erstreckende Speicherkammer (17) aufweist, welche das Differentialgetriebe (7) zumindest teilweise umschließt und in bezug auf die Hauptachse (5-5) axial neben dem Ringzahnrad (9) angeordnet ist, daß die Speicherkammer (17) eine obere, im Bereich des Zahnkranzes (18) des Ringzahnrades (9) liegende Eintrittsöffnung (19), eine untere, in den das Ringzahnrad (9) aufnehmenden Gehäuseinnenraum (20) des Teilgehäuses (15) mündende Öffnung (21) und eine mit dem Gehäusedurchgang (16) kommunizierende Austrittsöffnung (22) aufweist, daß der Gehäusedurchgang (16) einen im Bereich des Zahnkranzes (18) des Ringzahnrades (9) liegenden Mündungsabschnitt (23) im Gehäuseinnenraum (20) des Teilgehäuses (15) aufweist, und daß die untere Öffnung (21) durch ein temperaturabhängig steuerbares Absperrventil (24) verschließbar ist.

2. Antriebsanordnung nach Anspruch 1,
**dadurch gekennzeichnet**,
daß das Getriebegehäuse (14) an seiner Unterseite eine Trennfläche (26) für das Ansetzen einer Ölwanne (25) aufweist, welche in einer zur Hauptachse (5-5) parallelen, in Einbaulage etwa horizontalen Gehäuseebene liegt und sich anschließend an das Teilgehäuse (15) in einer zur Hauptachse (5-5) senkrechten Richtung erstreckt, und daß das Getriebegehäuse (14) einen Gehäusekanal (27) aufweist, welcher an seinem einen Kanalende (28) in den Gehäusedurchgang (16) und an seinem anderen Kanalende (29) in die Trennfläche (26) ausmündet.

3. Antriebsanordnung nach Anspruch 1 oder 2,
**dadurch gekennzeichnet**,
daß die Austrittsöffnung (22) in Form eines in den Durchgang (16) hineinragenden Überlaufes (30) ausgebildet ist.

4. Antriebsanordnung nach einem der Ansprüche 1 bis 3,
**dadurch gekennzeichnet**,
daß ein die Speicherkammer (17) aufweisender Gehäuseeinsatz (31) verwendet ist.

5. Antriebsanordnung nach Anspruch 4,
**dadurch gekennzeichnet**,
daß das Teilgehäuse (15) in einer zur Hauptachse (5-5) senkrechten Gehäuseebene (32-32) in einen mit einem Wandlergehäuse (33) einstückig ausgebildeten Gehäuseteil (34) und in einen mit dem Getriebegehäuse (14) einstückig ausgebildeten Gehäuseteil (35) unterteilt ist, und daß der Gehäuseeinsatz (31) an dem mit dem Wandlergehäuse (33) einstückig ausgebildeten Gehäuseteil (34) gehaltert ist.

6. Antriebsanordnung nach Anspruch 4 oder 5,
**dadurch gekennzeichnet**,
daß der Gehäuseeinsatz (31) aus einem im Querschnitt U-förmigen Hohlkörper (36) mit in Einbaulage parallel zur Hauptachse (5-5) liegenden Schenkelwänden (37, 38) und einem ringförmigen Verschlußdeckel (39) besteht.

7. Antriebsanordnung nach Anspruch 6,
**dadurch gekennzeichnet**,
daß der Hohlkörper (36) zwischen Verschlußdeckel (39) und Gehäuseteil (34) durch Schraubbolzen (40) eingespannt ist.

## Claims

1. A drive arrangement for a motor vehicle with a differential gear (7) arranged with its central axis in alignment with a geometric main axis (5-5) of a drive shaft (6), with an annulus (9) joined to the planetary gears (8) of the differential gear (7) so as to be integral in rotation and which is arranged concentrically with the central axis and meshes with a gear (10) of a drive shaft (12) of a gear box (13) arranged with its axis of rotation (11-11) parallel with the geometric main axis (5-5), having a gear housing (14) in which the gear shaft (12) is mounted and a part-housing (15) in which the differential gear (7) is mounted arranged so as to be prevented from moving and liquid-proof relative to the gear housing (14), the annulus (9) also being partially received therein, and with a housing through-passage (16) connecting the housing cavities of the gear housing (14) and the part-housing (15) to one another,
**characterised in that**
the part-housing (15) has a storage chamber (17) extending at least partially concentrically with the main axis (5-5), which at least partially surrounds the differential gear (7) and is arranged axially adjacent to the annulus (9) relative to the main axis (5-5), the storage chamber (17) has an upper inlet orifice (19) lying in the region of the rim gear (18) of the annulus (9), a lower orifice opening into the housing cavity (20) of the part-housing (15) receiving the annulus (9) and an outlet orifice communicating with the housing through-passage (16), the housing through-passage (16) has, in the housing cavity (20) of the part-housing (15), a mouth section (23) lying in the region of the rim gear (18) of the annulus (9) and the lower orifice (21) can be closed by means of a check valve (24) which is controlled depending on temperature.

2. A drive arrangement as claimed in claim 1,
**characterised in that**
the gear housing (14) has on its underside a partition face (26) for fitting an oil sump (25), which lies in a housing plane parallel with the main axis (5-5) that is more or less horizontal in the mounted position and extends in a direction perpendicular to the main axis (5-5) adjoining the part-housing (15) and the gear housing (14) has a housing passage (27) which opens into the housing through-passage (16) at one of its passage ends (28) and into the partition face (26) at the other passage end (29).

3. A drive arrangement as claimed in claim 1 or 2,
**characterised in that**
the outlet orifice (22) is provided in the form of an overflow (30) projecting into the through-passage (16).

4. A drive arrangement as claimed in one of claims 1 to 3,
**characterised in that**
a housing insert (31) containing the storage chamber (17) is used.

5. A drive arrangement as claimed in claim 4,
**characterised in that**
in a housing plane (32-32) perpendicular to the main axis (5-5), the part-housing (15) is divided into a housing part (34) constructed as an integral unit with a converter housing (33) and a housing part (35) constructed as an integral unit with the gear housing (14) and the housing insert (31) is retained against the housing part (34) constructed integrally with the converter housing (33).

6. A drive arrangement as claimed in claim 4 or 5,
**characterised in that**
the housing insert (31) consists of a hollow member (36) of a U-shaped cross-section having, in the mounted position, legs forming walls (37, 38) parallel with the main axis (5-5) and an annular closing cover (39).

7. A drive arrangement as claimed in claim 6,
**characterised in that**
the hollow member (36) is braced between closing cover (39) and housing part (34) by means of screw bolts (40).

## Revendications

1. Ensemble d'entraînement pour un véhicule à moteur, comportant un mécanisme différentiel (7) disposé avec son axe central dans l'alignement d'un axe géométrique principal (5-5) d'un essieu moteur (6), ainsi qu'une roue dentée annulaire (9) qui est reliée, sans liberté de rotation relative, à la cage porte-satellites (8) du mécanisme différentiel (7)et qui est disposée concentriquement à l'axe central et engrène avec une roue dentée (10) d'un arbre (12) d'une boîte de vitesses à pignons dentés disposé, par son axe de rotation (11-11), parallèlement à l'axe géométrique principal (5-5), ainsi qu'un carter de mécanisme (14) portant l'arbre de mécanisme (12), qu'un carter partiel (15) qui porte le mécanisme différentiel (7)et qui est disposé fixe par rapport au carter de mécanisme (14) et étanche au liquide et dans lequel est également reçue, au moins partiellement, la roue dentée annulaire (9), et ainsi qu'un passage du carter (16) qui relie l'un à l'autre les espaces intérieurs du carter de mécanisme (14) et le carter partiel (15),
caractérisé
par le fait que le carter partiel (15) présente une chambre réservoir (17) qui s'étend au moins partiellement concentriquement par rapport à l'axe principal (5-5) et qui enserre au moins partiellement le mécanisme différentiel (7) et est disposée à côté de la roue dentée annulaire (9), axialement par rapport à l'axe principal (5-5), que la chambre réservoir (17) présence une ouverture supérieure d'entrée (19) située dans la zone de la couronne dentée (18) de la roue dentée annulaire (9), une ouverture inférieure (21) débouchant dans l'espace intérieur (20) du carter partiel (15) qui reçoit la roue dentée annulaire (9) et une ouverture de sortie (22) qui communique avec le passage du carter (16), que le passage du carter (16) présente, dans l'espace intérieur (20) du carter partiel (15), un tronçon d'embouchure (23) situé dans la zone de la couronne dentée (18) de la roue dentée annulaire (9), et que l'ouverture inférieure (21) peut être obturée par une vanne d'arrêt (24) qui peut se commander en fonction de la température.

2. Ensemble d'entraînement selon la revendication 1,
caractérisé
par le fait que le carter de mécanisme (14) présente, à sa face inférieure, une surface limite (26) pour l'application d'une cuvette-carter à huile (25) surface qui se situe dans un plan du carter parallèle à l'axe principal (5-5), à peu près horizontal en position d'assemblage, et s'étend en se rattachant au carter partiel (15) selon une direction perpendiculaire à l'axe principal (5-5), et que le carter de mécanisme (14) présente un canal (27) qui, à sa première extrémité (28), débouche dans le passage du carter (16) et, à son autre extrémité (29), débouche dans la cloison (26).

3. Ensemble d'entraînement selon la revendication 1 ou 2,
caractérisé
par le fait que l'ouverture de sortie (22) est conçue sous forme d'un trop-plein (30) qui pénètre dans le passage (16).

4. Ensemble d'entraînement selon l'une des revendications 1 à 3,
caratérisé
par le fait que l'on emploie une garniture insérée de carter (31) présentant la chambre réservoir (17).

5. Ensemble d'entraînement selon la revendication 4,
caractérisé
par le fait que le carter partiel (15) se divise, dans un plan (32-32) du carter perpendiculaire à l'axe principal (5-5), en une partie de carter (34) conçue d'une pièce avec un carter de convertisseur (33) et en une partie de carter (35) conçue d'une pièce avec le carter de mécanisme (14), et que la garniture insérée (31) est fixée à la partie de carter (34) conçue d'une pièce avec le carter de convertisseur (33).

6. Ensemble d'entraînement selon la revendication 4 ou 5,
caractérisé
par le fait que la garniture insérée (31) est constituée d'un corps creux (36), en forme de U en coupe, avec des parois latérales (37, 38) situées parallèlement à l'axe principal (5-5) en position d'assemblage, et d'un couvercle annulaire de fermeture (39).

7. Ensemble d'entraînement selon la revendication 6,
caractérisé
par le fait que le corps creux (36) est bridé par des boulons (40) entre le couvercle de fermeture (39) et la partie de carter (34).
